# EUROPEAN PATENT APPLICATION

(11) **EP 2 500 521 A2**
(43) Date of publication of application: **19.09.2012**
(21) Application number: 12158498.1
(22) Date of filing: 07.03.2012
(51) Int. Cl.: F01D 5/30, F01D 11/00

(54) **Turbine interblade seal and corresponding assembly**

(30) Priority: 15.03.2011 US 201113048749
(71) Applicant: General Electric Company, Schenectady, New York 12345 (US)
(72) Inventor: Walunj, Jalindar Appa, 560066 Bangalore, Karnataka (IN); Shukla, Prashant, 560066 Bangalore, Karnataka (IN); Honkomp, Mark Steven, Greenville, SC South Carolina 29615 (US)
(74) Representative: Cleary, Fidelma

(57) **Abstract**

A system including a first turbine segment comprising a first blade coupled to a first shank. The system also includes a second turbine segment including a second blade coupled to a second shank, as well as a plunger seal disposed in a gap between the first and second shanks. The system also includes a biasing element disposed in a hollow region of the first shank, wherein the biasing element is directly adjacent to the plunger seal.

## Description

### BACKGROUND OF THE INVENTION

The subject matter disclosed herein relates to a seal for use in turbomachinery, such as a turbine engine.

A gas turbine engine combusts a mixture of fuel and air to generate hot combustion gases, which in turn drive one or more turbines. In particular, the hot combustion gases force turbine bucket segments to rotate, thereby driving a shaft to rotate one or more loads, e.g., electrical generator. These turbine bucket segments may include shanks that allow for adjacent placement in a turbine stage of the gas turbine engine. At the same time, highly compressed air is often extracted from a compressor for utilization in pressurizing a cavity formed between two adjacent bucket shanks. This positive pressure difference may aid in preventing hot combustion gases from entering into the shank cavity, thus avoiding increases in thermal stresses that adversely affect bucket life. However, as these bucket segments and their shanks may be individually produced and then combined into a single turbine stage, gaps may be present between the individual turbine bucket shanks. These gaps may provide a leakage path for the pressurized shank cavity air, thus reducing overall turbine efficiency and output. Accordingly, it is desirable to minimize the leakage of this pressurizing gas through gaps located between turbine bucket shanks in a turbine stage of a gas turbine engine.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in a turbine seal assembly configured to seal a gap between adjacent first and second turbine bucket segments, wherein the turbine seal assembly includes an elongated seal element, and an elongated biasing element extending along the elongated seal element, wherein the elongated biasing element comprises an elongated opening surrounded by first and second elongated portions, the first and second elongated portions are configured to flex toward and away from one another along the elongated seal element, and the elongated biasing element is configured to bias the elongated seal element across the gap.

In a second aspect, the invention resides in a system including a first turbine segment comprising a first blade coupled to a first shank, a second turbine segment comprising a second blade coupled to a second shank and a turbine seal assembly as described above wherein the elongated seal element comprises, a plunger seal disposed in a gap between the first and second shanks, and the elongated biasing element is disposed in a hollow region of the first shank, wherein the biasing element is directly adjacent to the plunger seal.

### BRIEF DESCRIPTION OF THE DRAWINGS

Embodiments of the present invention will now be described, by way of example only, with reference to the accompanying drawings in which:
FIG. 1 is a schematic flow diagram of an embodiment of a gas turbine engine having turbine bucket platforms with seals;
FIG. 2 is a side view of an embodiment of two turbine bucket segments of the gas turbine engine of FIG. 1 sectioned through the longitudinal axis;
FIG. 3 is a partial cross-sectional view of two turbine bucket segments of FIG. 2 through line 3-3;
FIG. 4 is perspective side view of an embodiment of a plunger seal of FIG. 2 and a biasing element;
FIG. 5 is a partial cross-sectional view of an embodiment of two turbine bucket segments of FIG. 3 through line 5-5, illustrating an embodiment of the plunger seal; and
FIG. 6 is a partial cross-sectional view of an embodiment of two turbine bucket segments of FIG. 3 through line 5-5, illustrating an embodiment of the plunger seal.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to a system and a method for sealing a gap between adjacent segments in a turbomachine, such as turbine bucket shanks in a turbine stage of a gas turbine engine, a steam turbine engine, a hydro turbine engine, or another turbine. The system and method may include inserting a plunger seal, such as a plunger seal pin, between adjacent turbine bucket shanks. The preload value from biasing elements and pressure differentials between the turbine bucket shanks may allow for a positive seal to be achieved by applying pressure to a seal dispersed between any two adjacent bucket shanks. This seal may be, for example, D-shaped or formed in other shapes and may be spring loaded to maintain the positive seal despite variations in the gap between adjacent shanks. Moreover, the spring loading of the seal may be accomplished via a biasing element, which may be C-shaped or formed in other shapes.

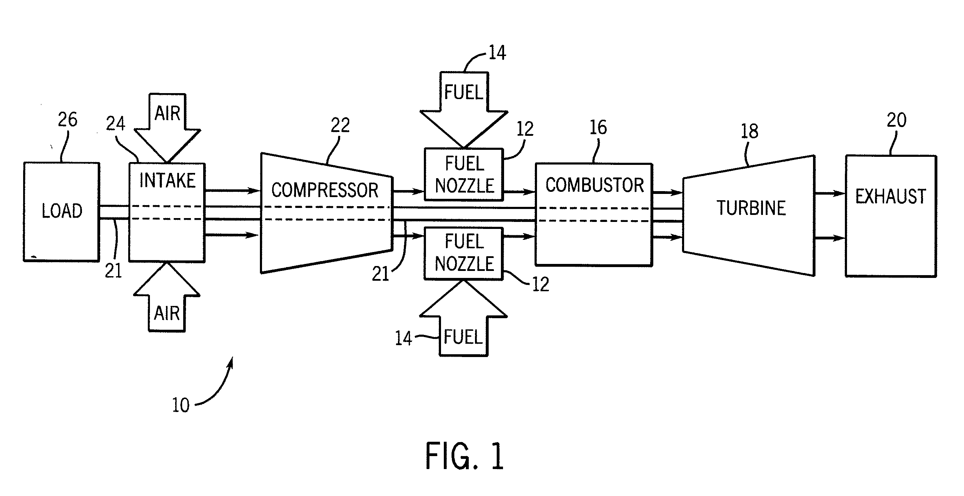

FIG. 1 is a block diagram of an exemplary turbine system including a gas turbine engine 10 that may employ turbine rotor buckets (i.e. blades). As discussed below, the buckets may include plunger seals, such as D-shaped plunger seals. In certain embodiments, the engine 10 may be utilized to power an aircraft, a watercraft, a locomotive, a power generation system, or combinations thereof. The illustrated gas turbine engine 10 includes fuel nozzles 12, which may intake a fuel supply 14 and mix the fuel with air, as well as distribute the air-fuel mixture into a combustor 16. The air-fuel mixture may combust in, for example, a chamber within combustor 16, thereby creating hot pressurized exhaust gases. The combustor 16 may direct the exhaust gases through a turbine 18 toward an exhaust outlet 20. As the exhaust gases pass through the turbine 18, the gases force turbine blades to rotate a shaft 21 along an axis of system 10. As illustrated, shaft 21 is connected to various components of the engine 10, including compressor 22. Compressor 22 also includes blades coupled to shaft 21. Thus, blades within compressor 22 rotate as shaft 21 rotates, compressing air from air intake 24 through compressor 22 into fuel nozzles 12 and/or combustor 16. Shaft 21 may also be connected to load 26, which may be a vehicle or a stationary load, such as an electrical generator in a power plant or a propeller on an aircraft. Load 26 may be any suitable device that is powered by the rotational output of the turbine engine 10.

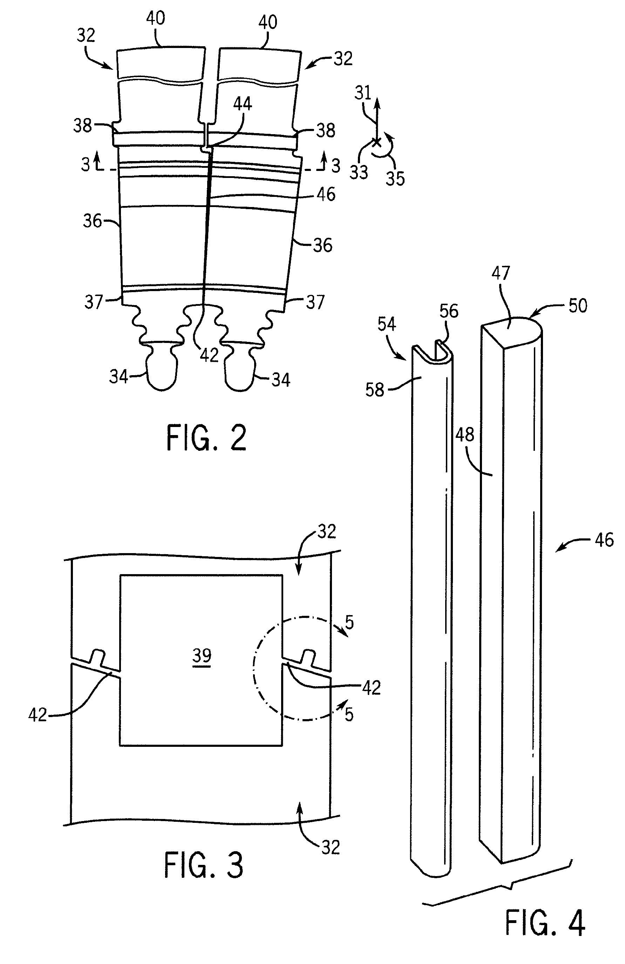

FIG. 2 illustrates a side view of an embodiment of two turbine bucket segments 32 of the turbine 18 portion of the gas turbine engine 12 of FIG. 1, as well as a legend that illustrates the orientation of the bucket segments 32 in a radial direction 31, an axial direction 33, and a circumferential direction 35. The turbine bucket segments 32 may, for example, be coupled to the shaft 21 via rotor wheels, and may be partially disposed within the path of the hot combustion gases as part of a single stage gas turbine, a dual-stage turbine system that includes a low-pressure turbine and a highpressure turbine, or in a multi-stage turbine system with three or more turbine stages. Alternatively, the turbine bucket segments 32 may be disposed in a steam turbine or a hydro turbine. For illustrative purposes, only two turbine bucket segments 32 are illustrated in FIG. 2; however, it should be noted that multiple turbine bucket segments 32 may be arranged, for example, to form a circular structure in the turbine 18.

The bucket segments 32 may be constructed of a metal, metal alloy, ceramic matrix composite (CMC), or other suitable material. Each bucket segment 32 includes a wheel mount 34, a shank 36, a platform 37, a platform 38, and a bucket or blade 40. In the illustrated embodiment, each bucket segment 32 includes a dovetail 34 as the wheel mount to couple the bucket segments 32 with a corresponding groove (e.g., axial 33 groove) of a rotor wheel in the turbine 18. Thus, the dovetail 34 extends into the wheel and the platform 37 rests on the wheel to support the shank 36. The shank 36 extends radially 31 outward from the dovetail 34 to the platform 38, which may be a ledge or base that supports the bucket or blade 40. For example, the bucket 40 may be an airfoil 40 extending radially 31 outward from the platform 38. The buckets 40 (e.g. airfoils) are disposed within the path of the hot combustion gases. In operation, the hot combustion gases exert motive forces on the airfoils 40 to drive the turbine 18.

FIG. 3 illustrates a partial cross-sectional view of the bucket segments 32 along line 3-3 of FIG. 2. As illustrated, the bucket segments 32 are positioned in an annular arrangement adjacent one another, with a cavity 39 formed therebetween. This cavity 39 may, for example, be a pressurized cavity that receives compressed air from the compressor 22 to prevent the hot combustion gases to enter into the shank cavity 39, thus avoiding potential increases in thermal stresses adversely affecting bucket life. However, in this configuration, the shape of the bucket segments 32 may cause a gap 42 (e.g., a leakage path from the cavity 39) to be present between the adjacent bucket segments 32. Returning to FIG. 2, this gap 42 may extend radially 31 along the shank 36 from the dovetail 34 to radially 31 beneath a damper opening 44, which may be located between the adjacent shanks 36 and radially 31 below the airfoil 40 of each of the bucket segments 32. This gap 42 may allow for cross-shank leakage of the pressurized shank cavity 39 air between the bucket segments 32. Unfortunately, this leakage may reduce the overall efficiency of the turbine 10 during use. Accordingly, it may be desirable to prevent this cross-shank leakage from occurring through the use of, for example, one or more plunger seals 46 in the gap 42.

FIG. 4 illustrates a perspective side view of an embodiment of a plunger seal 46 that may be utilized for sealing the gap 42 between bucket segments 32. The plunger seal 46 may, for example, include an elongated structure having a D-shaped cross-section 47 to defme the shape of the plunger seal 46, wherein the D-shaped cross-section 47 extends along a radial axis 31 of the plunger seal 46. This plunger seal 46 may be a plunger seal pin characterized as a D-type seal, which includes a straight portion 48 (e.g., flat surface) and a C-shaped portion 50 (e.g., curved surface) that combine to form a D-shape for the plunger seal 46. In other words, the plunger seal 46 may be defined as an elongated seal with the D-shaped cross-section 47 along its length. For example, the plunger seal 46 may be an extended D-shape with a uniform D-shaped cross-section 47 along its length. In certain embodiments, the plunger seal 46 may be extruded to form the uniform D-shaped cross-section.

Moreover, the C-shaped portion 50 of the plunger seal 46 may remain generally rigid when pressure is applied, such that the straight portion 48 and the C-shaped portion 50 may resist movement with respect to one another. In another embodiment, the plunger seal 46 may compress when pressure is applied. This pressure may be caused, for example, by thermal expansion of the bucket segments 32, thereby compressing the plunger seal 46 within the gap 42. Accordingly, it may be desirable for the material utilized in making the plunger seal 46 to have a coefficient of thermal expansion that is equal to or less than the bucket segments 32. As such, the plunger seal 46 may be made from nickel, cobalt, a nickel base superalloy, or other suitable materials, with desirable mechanical properties able to withstand turbine operating temperatures and conditions. Examples of usable superalloys may include René N4 or René N5, which are examples of single crystal, high strength nickel base superalloys that may be utilized to construct the plunger seal 46. The material chosen for the plunger seal 46 may be based on requirements for mechanical strength, creep resistance at high temperatures, corrosion resistance, or other attributes. The plunger seal 46 may be sized such that it fits into the gap 42.

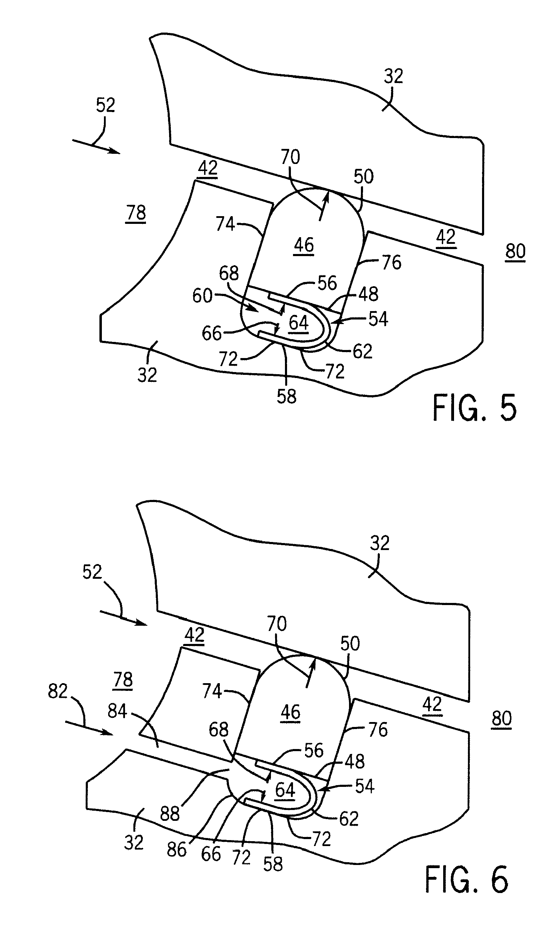

FIG. 4 also illustrates a biasing element 54 that may be utilized in conjunction with the plunger seal 46, for example, to aid in the sealing of the gap 42. This biasing element 54 may, for example, be a c-type spring. The biasing element 54 may, for example, include flexible shapes having, for example, any number of C-shaped portions to define a single C-shape, a double C-shape (e.g., a W-shape), or other curving or winding shapes. Accordingly, the biasing element 54 may be a flexible C-shaped element that includes two straight portions 56 and 58. In one embodiment, the C-shape extends along an axis of the biasing element 54. Moreover, the biasing element 54 may be elongated and may extend along the elongated plunger seal 46. That is, the biasing element 54 may be defmed as an elongated spring with a C-shaped cross-section along its length. An illustration of the plunger seal 46 and biasing element 54 installed between two bucket segments 32 is illustrated in FIG. 5.

FIG. 5 illustrates a cross-sectional view of the bucket segments 32 along line 5-5 of FIG. 3, illustrating an embodiment of the plunger seal 46 (e.g. a D-type seal). As illustrated, the plunger seal 46 may be a plunger seal pin inserted between the bucket segments 32, such that the plunger seal 46 maintains a positive seal despite variations in the gap 42 to block cross-shank leakage of gas along line 52. To aid in the sealing of the gap 42, a biasing element 54 may be utilized in conjunction with the plunger seal 46. As previously discussed, this biasing element 54 may, for example, be a c-type spring. In one embodiment, the biasing element 54 may be made from nickel, cobalt, or iron-base superalloys, or other suitable materials, with desirable mechanical properties able to withstand turbine operating temperatures and conditions (such as 310 stainless steel). Examples of usable superalloys may include Inconel® alloy 600, Inconel® alloy 625, Inconel® alloy 718, Inconel® alloy 738, Inconel® alloy X-750, or Hastalloy® X. Thus, the material chosen for the biasing element 54 may be based on requirements for mechanical strength, creep resistance at high temperatures, corrosion resistance, or other attributes and may, for example, have a coefficient of thermal expansion that is greater than the bucket segments 32 coefficient of thermal expansion and greater than the coefficient of thermal expansion of the plunger seal 46.

The biasing element 54 may be a flexible C-shaped element that includes two straight portions 56 and 58 that combine to form an opening 60 in the biasing element 54 opposite a curved portion 62 of the biasing element 54. In other words, the biasing element 54 may be defined as an elongated spring with a C-shaped cross-section along its length. For example, the biasing element 54 may be an extended C-shape with a uniform C-shaped cross-section along its length. In certain embodiments, the biasing element 54 may be extruded to form the uniform C-shaped cross-section. Furthermore, each of the straight portions 56 and 58 of the biasing element 54 may flex along the curved portion 62 as pressure is applied, such that the straight portions 56 and 58 may move toward and away from one another. This pressure may be caused, for example, by thermal expansion of the bucket segments 32 when the biasing element is fitted into a hollow region 64 of one of the bucket segments 32.

As illustrated, the biasing element 54 may provide a resiliency, a flexibility, or a spring-force, which, in conjunction with the plunger seal 46, creates a pre-load in the gap 42 between the bucket segments 32. In other words, the straight portions 56 and 58 of the biasing element 54 may flex or bend toward one under upon installation in hollow region 64 of one of the bucket segments 32 and when acted upon by the pressure exerted along the straight portion 48 of the plunger seal 46. That is, as the bucket segments 32 thermally expand, the two straight portions 56 and 58 impart an outward force 66 to the bucket segment 32 and an outward force 68 to the plunger seal 64 to contribute to outward force 70 toward the adjacent bucket segment 32. In this manner, the biasing element 54 is preloaded into position in hollow region 64 of one of the bucket segments 32. For example, the biasing element 54 may be loaded into a hollow region 64 of one of the bucket segments 32 that includes a substantially flat portion 72 that receives the biasing element 54, as well as two substantially flat portions 74 and 76 perpendicular and adjacent to the flat portion 72 that receive the plunger 46.

Thus, as each of the bucket segments 32 applies force to straight portion 58 of the biasing element 54 and the curved portion 52 of the plunger seal 46, the straight portions 56 and 58 impart outward forces 66 and 68 and the plunger seal imparts outward force 70 to define the preload on the bucket segments 32. Moreover, pressure differentials between gases present in the frontside 78 (e.g., upstream side inclusive of the cavity 39) of the bucket segments 32 and the backside 80 (e.g., downstream side) of the bucket segments 32 may also aid in creating a sealing force to prevent cross-shank leakage across gap 42. For example, pressure of gases present in the frontside 78 (e.g., in the cavity 39) of the bucket segments 32 may be greater than those present in the backside 80 of the bucket segments 32, which may cause a pressure differential across the plunger seal 46 that aids in the generation of a sealing force across gap 42.

FIG. 6 illustrates a cross-sectional view of the bucket segments 32 along line 5-5 of FIG. 3, illustrating an embodiment of plunger seal 46 with a biasing element 54. As illustrated, the plunger seal 46 may be a plunger seal pin and may operate in conjunction with biasing element 54 to create a pre-load in the gap 42 between the bucket segments 32. In other words, the straight portions 56 and 58 may flex or bend toward one under upon installation in the hollow region 64 of one of the bucket segments 32, such that the straight portions 56 and 58 impart outward forces 66 and 68. Additionally, to aid in increasing outward forces 66 and 68, high pressure gas present in the frontside 78 (e.g., upstream side inclusive of the cavity 39) of the bucket segments 32 may be channeled into the opening 60 of the biasing element 54. That is, high pressure gas present in the frontside 78 (i.e., in the cavity 39) may be directed along line 82 through a channel 84 of one of the bucket segments 32. That is, the channel 84 may connect the frontside 78 with the hollow region 64 of one of the bucket segment 32. For example, the channel 84 may open into the hollow region 64 via a ramped portion 86 of the bucket segment 32 adjacent the flat portion 72 that receives the biasing element 54. The ramped portion 86 may receive gas from a gas entry portion 88 that direct a gas flow from path 82 toward the opening 60 in the biasing element 54 when positioned in the hollow region 64. This pressurized gas may aid in imparting additional force to the biasing element 54 (i.e., adding to outward forces 66 and 68), and, thus, to the plunger seal 46 and the adjacent bucket segments 32.

Thus, the plunger seal 46 provides a preload that is aided by the biasing element 54 (e.g., outward bias of the straight portions 56 and 58) as well as an additional load attributed to the pressure of gases expanding the C-shape of the biasing element 54 during operation. Thus, the outward forces 66 and 68 (and, accordingly, outward force 70) may include a biasing force of the biasing element 54, the gas pressure of gas inside the biasing element 54, and the integral force of the straight portions 56 and 58 relative to the curved portion 62. Again, the biasing forces combine with the pressure differential between gases present in the frontside 78 (i.e., in the cavity 39) of the bucket segments 32 and the backside 80 of the bucket segments 32 to aid in creating a positive seal to block cross-shank leakage across gap 42, for example, along line 52. In one embodiment, the reaction force due to the biasing and pressure differential pressure of gases present in the frontside 78 and backside 80 of the bucket segments 32 may be represented by the equation: Fᵣₛ=(Pₕ - P₁) x rᵢ₋ₛₑₐₗ x Lₛₑₐₗ x K_{biasing-}element x δ - F_{f}, whereby Fᵣₛ is the reaction force due to the biasing and pressure differential pressure of gases present in the frontside 78 and backside 80 of the bucket segments 32, Pₕ is the frontside 78 pressure, Pₗ is the backside pressure 80, rᵢ₋ₛₑₐₗ is the inner radius of the plunger seal 46, Lₛₑₐₗ is the length of the plunger seal 46, K_{biasing-}element is the spring coefficient of biasing element 54, δ is the springback value of the plunger seal 46 (e.g., the distance moved by the plunger seal 46 during, for example, thermal expansion of adjacent bucket segments 32), and F_{f} is the frictional force of the plunger seal 46 adjacent substantially flat portion 76 of the bucket segment 32. Analysis of the reaction force described above may be utilized to determine the load that will be present on the plunger seal 46 to insure positive sealing of the gap 42 by the plunger seal 46 to prevent cross-shank leakage between the two bucket segments 32.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A turbine seal assembly (46) configured to seal a gap (42) between adjacent first and second turbine bucket segments (32), wherein the turbine seal assembly comprises:
an elongated seal element (46); and
an elongated biasing element (54) extending along the elongated seal element (46), wherein the elongated biasing element (54) comprises an elongated opening (60) surrounded by first and second elongated portions (56,58), the first and second elongated portions (56,58) are congfigured to flex toward and away from one another along the elongated seal element (54), and the elongated biasing element (54) is configured to bias the elongated seal element (46) across the gap (42).

2. The system of claim 1, wherein the elongated biasing element (54) is configured to receive a pressurized fluid in the elongated opening to bias the first and second elongated portions away from one another.

3. The system of claim 1 or 2, wherein the elongated biasing element (54) comprises a C-shaped cross-section extending along an axis (31) of the turbine seal assembly.

4. The system of claim 3, wherein the elongated seal element (46) comprises a D-shaped cross-section (47) extending along the axis (31) of the turbine seal assembly.

5. The system of any of claims 1 to 4, wherein the elongated seal element (46) comprises a first uniform cross-section (47) along an axis of the turbine seal assembly, and the elongated biasing element (54) comprises a second uniform cross-section along the axis (31) of the turbine seal assembly.

6. The system of any of claims 1 to 5, wherein the elongated biasing element (54) comprises an intermediate elongated portion (62) extending along the elongated opening (60) between the first and second elongated portion (56,58), and the intermediate elongated portion (62) curves from the first elongated portion to the second elongated portion (56,58).

7. The system of claim 6, wherein the first elongated portion (56) comprises a first straight portion and the second elongated portion (58) comprises a second straight portion.

8. The system of any preceding claim, wherein the turbine seal assembly is configured to mount within an elongated recess (39) in the first turbine bucket segment (32), the elongated biasing element (54) is configured to bias the elongated seal element (46) away from the elongated recess (39) across the gap (42) toward the second turbine bucket segment (32), and the turbine seal assembly is configured to extend in a radial direction relative to a rotational axis of a turbine (18) having the first and second turbine bucket segments (32).

9. The system of claim 8, comprising the first turbine bucket segment (32) having the turbine seal assembly disposed in the elongated recess (64).

10. The system of any preceding claim, wherein the elongated seal element (46) comprises material having a first coefficient of thermal expansion that is less than or equal to a second coefficient of thermal expansion of the first and second turbine bucket segments (32).

11. The system of any preceding claim, wherein the elongated biasing element (54) comprises material having a first coefficient of thermal expansion that is greater than a second coefficient of thermal expansion of the first and second turbine bucket segments (32).

12. A system, comprising:
a first turbine segment (32) comprising a first blade (40) coupled to a first shank (36);
a second turbine segment (32) comprising a second blade (40) coupled to a second shank (36); and
a turbine seal assembly as recitd in any of claims 1 to 11,
wherein the elongated seal element (46) is a plunger seal disposed in a gap between the first and second shanks (36); and
the elongated biasing element (54) disposed in a hollow region (64) of the first shank (36), wherein the biasing element (54) is directly adjacent to the plunger seal (46).

13. The system of claim 12, wherein the first turbine segment (32) comprises a channel (84) disposed between a an upstream side of the first turbine segment (32) and the hollow region (64).

14. The system of claim 13, wherein the opening (60) in the elongated biasing element (54) configured to receive a fluid flow from the channel (84) to induce expansion of the biasing element (54).

15. The system of any of claims 12 to 14, wherein the plunger seal (46) extends along the gap (42) between the first and second shanks (32) in a radial direction relative to a rotational axis of the first and second turbine segments (32), and the plunger seal (46) is at least partially disposed in the hollow region (64) of the first shank (32).
